# EUROPEAN PATENT SPECIFICATION

(11) **EP 3 203 750 B1**
(45) Date of publication and mention of the grant of the patent: **02.08.2023**
(21) Application number: 17152849.0
(22) Date of filing: 24.01.2017
(51) Int. Cl.: H04N 21/41, G06F 13/40, H04N 21/4363, H04N 21/443

(54) **VIDEO TRANSMITTER, VIDEO RECEIVER AND ASSOCIATED MODE SWITCHING METHOD**
VIDEOSENDER, VIDEOEMPFÄNGER UND ZUGEHÖRIGES MODUSUMSCHALTVERFAHREN
ÉMETTEUR VIDÉO, RÉCEPTEUR VIDÉO ET PROCÉDÉ DE COMMUTATION DE MODE ASSOCIÉ

(30) Priority: 03.02.2016 TW 105103570
(43) Date of publication of application: 09.08.2017
(73) Proprietor: BenQ Corporation, Taipei 114 (TW)
(72) Inventor: WU, Chen-Chi, 114 Taipei City (TW); TAI, Ming-Sheng, 221 New Taipei City (TW); SHI, Chia-Nan, 221 New Taipei City (TW); HSIUNG, An-Jou, New Taipei City 241 (TW); LO, Chih-Kang, 204 Keelung City (TW)
(74) Representative: dompatent von Kreisler Selting Werner - Partnerschaft von Patent- und Rechtsanwälten mbB

(56) References cited:
- ANONYMOUS: "VESA DISPLAYPORT STANDARD, Version 1.1a", VESA DISPLAYPORT STANDARD, VERSION, VIDEO ELECTRONICS STANDARDS ASSOCIATION, USA, vol. Version 1.1a, 11 January 2008 (2008-01-11), pages 1-238, XP008161314,
- JINSOO HAN ET AL: "Service-Oriented Power Management for an Integrated Multi-Function Home Server", CONSUMER ELECTRONICS, 2007. ICCE 2007. DIGEST OF TECHNICAL PAPERS. INT ERNATIONAL CONFERENCE ON, IEEE, PI, 1 January 2007 (2007-01-01), pages 1-2, XP031071486, ISBN: 978-1-4244-0762-0
- HDMI: "High-Definition Multimedia Interface. Specification Version 1.4", INTERNET CITATION, 23 March 2010 (2010-03-23), page 425pp, XP009133650, Retrieved from the Internet: URL:http://wenku.baidu.com/view/e7db77d184 254b35eefd34d0.html [retrieved on 2010-06-16]

## Description

### FIELD OF THE INVENTION

The present invention relates to a mode switching method for transmitting and receiving video signals through a wireless network.

### BACKGROUND OF THE INVENTION

Nowadays, the trends of designing consumer electronic devices are toward wireless communication technologies in order to solve the drawbacks of using connecting wires. A wireless projector is one of the consumer electronic devices according to the wireless communication technology. For projecting a video frame from a computer and sharing the video frame with other users, the use of an additional transmission line to share the video frame results in some drawbacks. Firstly, the computer should have a transmission interface matching the projector. Secondly, the position of the projector and the length of the transmission line have to be taken into consideration. For solving the above drawbacks, the projector with the functions of transmitting and receiving signals through the wireless network is introduced into the market. However, when the video signals are transmitted through the wireless network, the video playback performance is influenced by bandwidth of the wireless network. Moreover, the devices cooperating with the wireless projector usually do not meet the power-saving purpose.

"High-Definition Multimedia Interface. Specification Version 1.4", discloses the HDMI 1.4 specification. In particular, it discloses the specification of the HPD signal (see section 8.5) wherein an HDMI sink shall indicate any change to the contents of the EDID by driving a low voltage level pulse on the HPD pin.

"VESA DISPLAYPORT STANDARD, Version 1.1 a" discloses the DisplayPort standard. In particular, it discloses the source device behavior upon HPD (Hot Plug Detection) pulse detection (see p. 219). The HPD signal notifies the Source Device that the following event has occured: IRQ: Sink Device wants to notify the Source Device that sink's status has changed so it toggles HPD line, forcing the Source Device to read its Link/Sink Status Receiver DPCD field via the AUX-CH.

"Service-Oriented Power Management for an Integrated Multi-Function Home Server" discloses a detection method for service exit when a user watches cable TV and then turns off the TV, not a home server, by a remote controller, the resources for the cable TV service are still in use although the TV does not need the service. This document discloses a solution based on the HPD signal of HDMI for service exit awareness. The HPD pin is set to a low state in case of TV's turn off state, the home server can recognize that the service through the HDMI port is unnecessary and then release the resources allocated for the HDMI port.

### SUMMARY OF THE INVENTION

The present invention provides a mode switching method. The mode switching method are easily operated and meet the power-saving requirements. The invention is defined by the appended set of claims.

Numerous objects, features and advantages of the present invention will be readily apparent upon a reading of the following detailed description of embodiments of the present invention when taken in conjunction with the accompanying drawings. However, the drawings employed herein are for the purpose of descriptions and should not be regarded as limiting.

### BRIEF DESCRIPTION OF THE DRAWINGS

The above objects and advantages of the present invention will become more readily apparent to those ordinarily skilled in the art after reviewing the following detailed description and accompanying drawings, in which:
FIG. 1 is a schematic block diagram illustrating a video playing system for transmitting video signal through a wireless network;
FIG. 2A schematically illustrates the operations of the video playing system before a mode parameter is changed;
FIG. 2B schematically illustrates the operations of the video playing system while the mode parameter is changed;
FIG. 2C schematically illustrates the operations of the video playing system after the mode parameter is changed;
FIGS. 3A and 3B schematically illustrate a process of transmitting video signals by the video playing system according to the updated value of the mode parameter;
FIG. 4A is a schematic block diagram illustrating a video transmitter not being part of the present invention;
FIG. 4B is a flowchart of an operating method of the video transmitter;
FIGS. 5A, 5B and 5C schematically illustrate mapping between the values of the mode parameter and the video formats;
FIGS. 6A, 6B, 6C and 6D schematically illustrate four examples of the hardware operation unit of the video transmitter;
FIG. 7A is a schematic block diagram illustrating a video receiver not being part of the present invention;
FIG. 7B is a flowchart of an operating method of the video receiver;
FIG. 8 schematically illustrates a process of changing the principle video transmitter of the video playing system;
FIG. 9 is a schematic block diagram illustrating the connection between the video receiver and the video display device through an HDMI cable according to an embodiment of the present invention;
FIG. 10 is a flowchart of a mode switching method of the video receiver according to an embodiment of the present invention;
FIGS. 11Aand 11B schematically illustrates an HDMI transmission interface;
FIG. 12 schematically illustrates the circuitry of the TMDS clock group;
FIG. 13 schematically illustrates the voltage of the hot plug detect signal changed from a high level to a low level; and
FIGS. 14A and 14B are two examples illustrating the voltage of the hot plug detect signal changed from a low level to a high level.

### DETAILED DESCRIPTION OF PREFERRED EMBODIMENTS

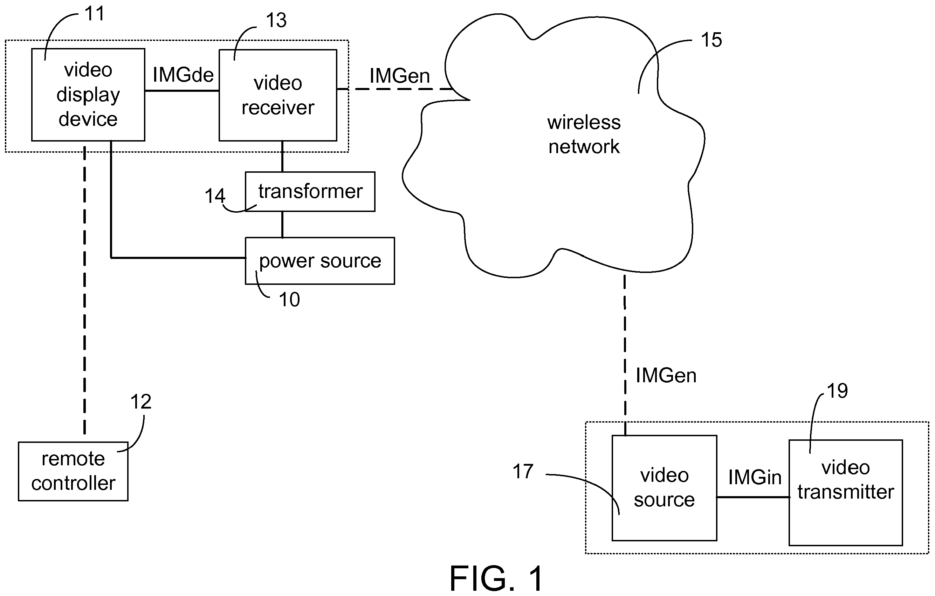

FIG. 1 is a schematic block diagram illustrating a video playing system for transmitting video signal through a wireless network. The video playing system can be divided into a source side and a playing side by the wireless network 15. The source side includes a video source 19 (for example, a notebook computer) and a video transmitter 17. The video source 19 and the video transmitter 17 are connected with each other through a physical wire such as universal serial bus (hereinafter, USB), D-SUB, high definition multimedia interface (hereinafter, HDMI) or any other appropriate connecting interface. The playing side includes a video display device 11 (such as a projector or a TV) and a video receiver 13. Similarly, the video display device 11 and the video receiver 13 are connected with each other through a physical wire such as D-SUB, HDMI or any other appropriate connecting interface. In case that the video display device 11 is located at a higher position, the user may control the on/off states of the video display device 11 through a remote controller 12.

The video transmitter 17 and the video receiver 13 are a pair of external devices. The video transmitter 17 cooperates with the video source 19, and the video receiver 13 cooperates with the video display device 11. After the video transmitter 17 is connected with the video source 19 (for example, a notebook computer), the video frame of the notebook computer can be transmitted through the video transmitter 17. Consequently, it is not necessary to install additional software in the notebook computer to transmit the video frame. In an embodiment, the video transmitter 17 is connected with the notebook computer through a USB interface and powered by the notebook computer through the USB interface. Even if the video display device 11 (for example, a projector or a TV) has no wireless network function, the video display device 11 connected with the video receiver 13 can output and display the video contents from the video transmitter 17. Since the operation of the video receiver 13 is independent of the video display device 11, the video receiver 13 is connected with a transformer 14. After converting an input power from a power source 10 into a regulated voltage, the transformer 14 provides the regulated voltage to the video receiver 13. Moreover, the video receiver 13 cannot be operated through the remote controller 12.

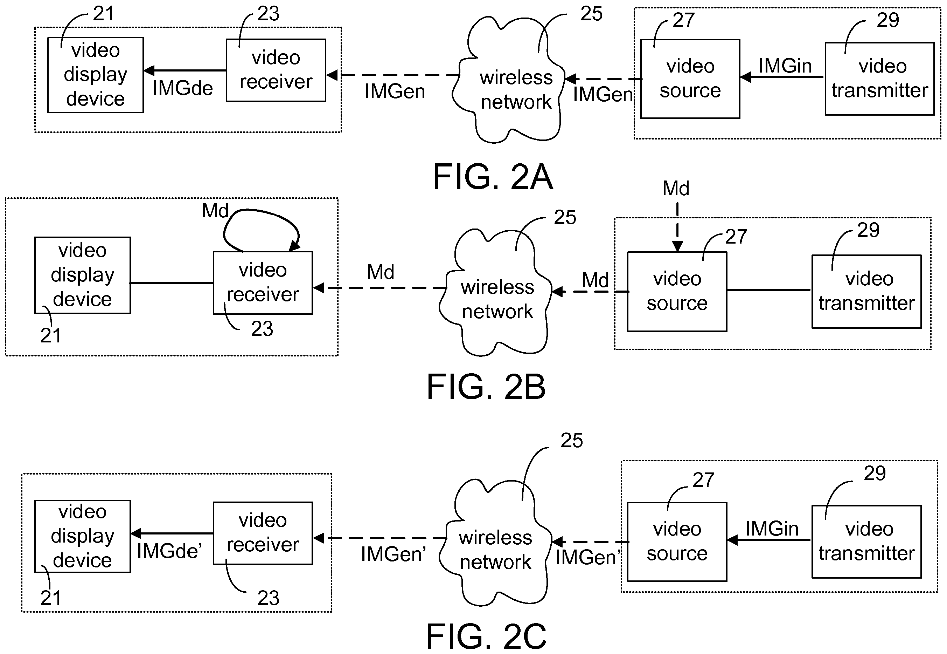

FIG. 2A schematically illustrates the operations of the video playing system before a mode parameter is changed. FIG. 2B schematically illustrates the operations of the video playing system while the mode parameter is changed. FIG. 2C schematically illustrates the operations of the video playing system after the mode parameter is changed.

Please refer to FIG. 2A. After generating an initial video signal IMGin, the video source 29 transmits the initial video signal IMGin to the video transmitter 27 through a USB transmission line or an HDMI cable. After encoding and compressing the initial video signal IMGin, the video transmitter 27 generates and transmits an encoded video signal IMGen to the wireless network 25. After receiving the encoded video signal IMGen from the wireless network 25, the video receiver 23 decompresses and decodes the encoded video signal IMGen and thus generates a decoded video signal IMGde. After transmitting the decoded video signal IMGde, the video display device 21 plays the decoded video signal IMGde.

Moreover, according to the communication protocol of the wireless network 25, the encoded video signal IMGen is packed as a network packet by the video transmitter 27. Similarly, the contents of the encoded video signal IMGen are unpacked by the video receiver 23. The way of packing the encoded video signal IMGen as the network packet and the way of unpacking the encoded video signal IMGen are not redundantly described herein.

However, the bandwidth of the wireless network 25 is not kept unchanged. For example, the transmission speed of the wireless network 25 can be 130Mbps, 90Mbps, 80Mbps or 40Mbps. If the transmission speed of the wireless network 25 is different, the data amount of the decoded video signal IMGde to be successfully outputted is different. Moreover, the data amount of the decoded video signal IMGde to be successfully outputted is determined according to the video format of compressing and encoding. If the transmission speed of the wireless network 25 gradually decreases, the decoded video signal IMGde outputted from the video display device 21 are suffered from many problems such as frame loss, instant black screen, mosaic or freeze frame.

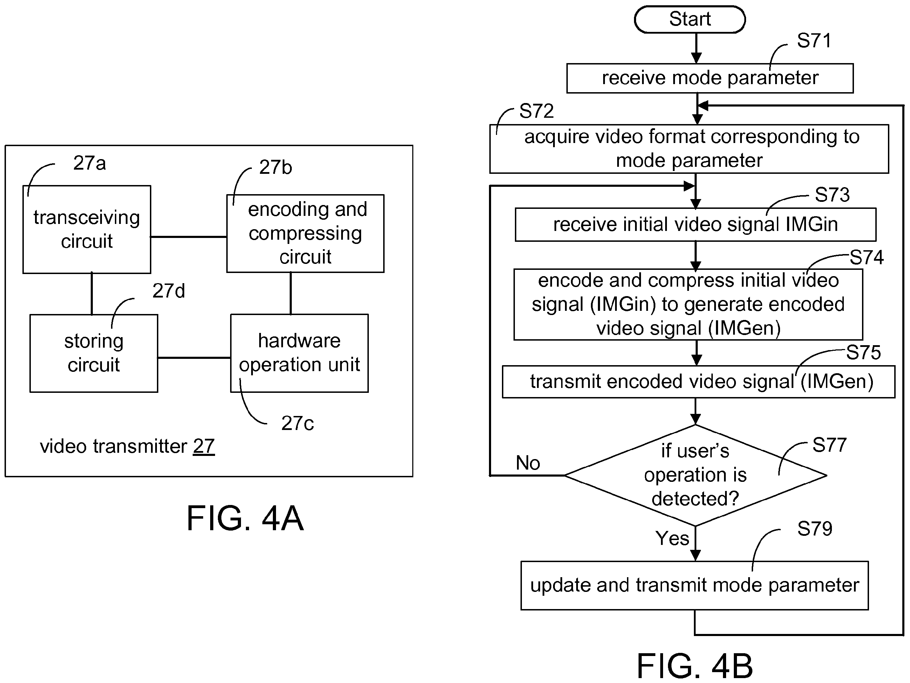

In accordance with a feature of the present invention, the video transmitter 27 has the function of setting and changing a mode parameter Md. The value of the mode parameter Md can be adjusted by changing a setting of a hardware operation unit 27c (see FIG. 4A). When the hardware operation unit 27c of the video transmitter 27 is changed in response to an operating action of the user, the value of the mode parameter Md is correspondingly changed.

If the quality of outputting the decoded video signal IMGde is unsatisfied, the user may directly operate the hardware operation unit 27c. When the operating action directly performed on the hardware operation unit 27c is detected, the video transmitter 27 changes the value of the mode parameter Md accordingly.

Please refer to FIG. 2B. Since the value of the mode parameter Md is changed, the video format of the encoded video signal IMGen' that is generated by the video transmitter 27 is correspondingly changed. When the operating action directly performed on the hardware operation unit 27c is detected, the changed (updated) value of the mode parameter Md is transmitted from the video transmitter 27 to the video receiver 23 through the wireless network 25.

After the updated value of the mode parameter Md is received by the video receiver 23, the updated value of the mode parameter Md is stored in the video receiver 23. In some applications, the video format corresponding to the mode parameter Md is determined by the video transmitter 27 and the video receiver 23 according to an H.264 standard, an H.265 standard or a Motion JPEG standard.

Please refer to FIG. 2C. The video transmitter 27 transmits the encoded video signal IMGen' to the video receiver 23 through the wireless network 25. After receiving the encoded video signal IMGen', the video receiver 23 generates the new decoded video signal IMGde' according to the updated value of the mode parameter Md and its corresponding video format.

For example, if freeze frames are displayed on the video display device 21, the user may operate the hardware operation unit 27c to change the value of the mode parameter Md. The data amount of the decoded video signal IMGde' corresponding to the updated value of the mode parameter Md is smaller than that corresponding to the initial value of the mode parameter. That is, the compression ratio of the encoded video signal IMGen' corresponding to the value of the mode parameter Md is increased, or the frame rate of the encoded video signal IMGen' corresponding to the value of the mode parameter Md is decreased. On the other hand, if the video content to be shared is changed from a presentation to a movie, the user may operate the hardware operation unit 27c to change the value of the mode parameter Md in order to increase the image quality.

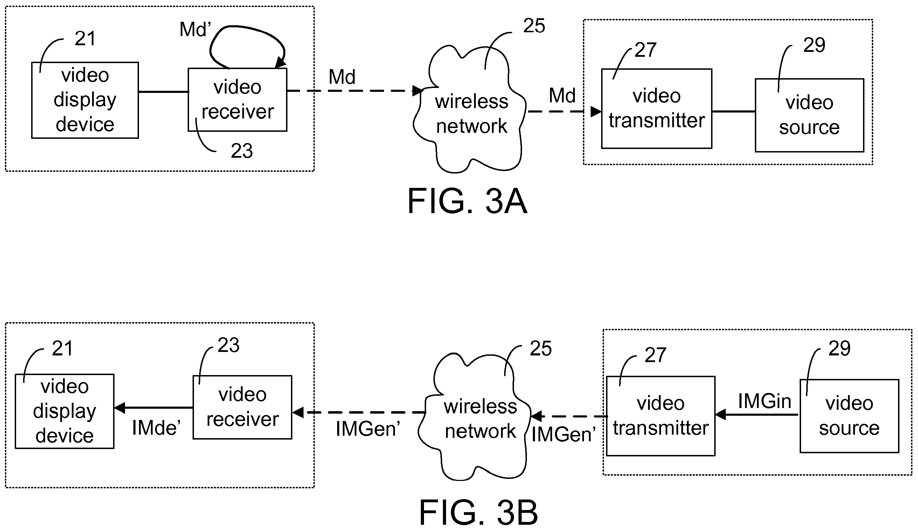

FIGS. 3A and 3B schematically illustrate a process of transmitting video signals by the video playing system according to the updated value of the mode parameter. Please refer to FIG. 3A. After receiving the updated value of the mode parameter Md, the video receiver 23 stores the updated value of the mode parameter Md. When the video playing system is enabled again, the video receiver 23 reads the mode parameter Md from a storing circuit thereof, and transmits the mode parameter Md to the video transmitter 27 through the wireless network 25.

Please refer to FIG. 3B. After the mode parameter Md is received by the video transmitter 27, the initial video signal IMGin is encoded and compressed by the video transmitter 27 in the video format corresponding to the mode parameter Md. Moreover, the encoded video signal IMGen' is generated and transmitted to the wireless network 25. After the encoded video signal IMGen' from the wireless network 25 is received by the video receiver 23, the encoded video signal IMGen' is decompressed and decoded by the video receiver 23 and thus the decoded video signal IMGde' is generated. After the decoded video signal IMGde' is transmitted to the video display device 21, the decoded video signal IMGde' is played by the video display device 21.

FIG. 4A is a schematic block diagram illustrating a video. As shown in FIG. 4A, the video transmitter 27 includes a transceiving circuit 27a, an encoding and compressing circuit 27b, a hardware operation unit 27c and a storing circuit 27d, which are electrically connected with each other. The transceiving circuit 27a is in communication with the wireless network 25 and electrically connected with the video source 29 through a transmission line. The hardware operation unit 27c is used for receiving the operation of the user. The mode parameter Md and the corresponding video format are stored in the storing circuit 27d.

FIG. 4B is a flowchart of an operating method of the video transmitter. In a step S71, the transceiving circuit 27a receives the mode parameter from the video receiver 23 through the wireless network 25. Then, the encoding and compressing circuit 27b acquires the video format corresponding to the mode parameter from the storing circuit 27d (Step S72). Then, the encoding and compressing circuit 27b receives an initial video signal IMGin from the video source 29 (Step S73). Then, the initial video signal IMGin is encoded and compressed by the encoding and compressing circuit 27b in the video format (Step S74). Consequently, an encoded video signal IMGen is generated. After the encoded video signal IMGen is transmitted from the encoding and compressing circuit 27b to the transceiving circuit 27a, the encoded video signal IMGen is transmitted from the transceiving circuit 27a to the wireless network 25 (Step S75). Then, a step S77 is performed to determine whether a user's operation directly performed on the hardware operation unit 27c is detected. If the determination condition of the step S77 is not satisfied, the initial video signal IMGin is encoded and compressed in the original video format by the encoding and compressing circuit 27b and the encoded video signal IMGen is transmitted from the transceiving circuit 27a. That is, the steps S73, S74 and S75 are repeatedly done.

If the determination condition of the step S77 is satisfied, the updated value of the mode parameter is transmitted from the hardware operation unit 27c to the encoding and compressing circuit 27b and the transceiving circuit 27a. Moreover, the updated value of the mode parameter is transmitted from the transceiving circuit 27a to the video receiver 23 through the wireless network 25 (Step S79). After the step S71, the encoding and compressing circuit 27b acquires the new video format corresponding to the mode parameter (Step S72). Then, the encoding and compressing circuit 27b receives the initial video signal IMGin from the video source 29 (Step S73), and the initial video signal IMGin is encoded and compressed by the encoding and compressing circuit 27b in the new video format (Step S74).

As mentioned above, different values of the mode parameter and their corresponding video formats are stored in the storing circuits of the video transmitter and the video receiver. In an embodiment, the mapping between the values of the mode parameter and the video formats can be self-defined by the user. In another embodiment, the mapping between the values of the mode parameter and the video formats can be stored in the storing circuits of the video transmitter and the video receiver when video transmitter and the video receiver are manufactured.

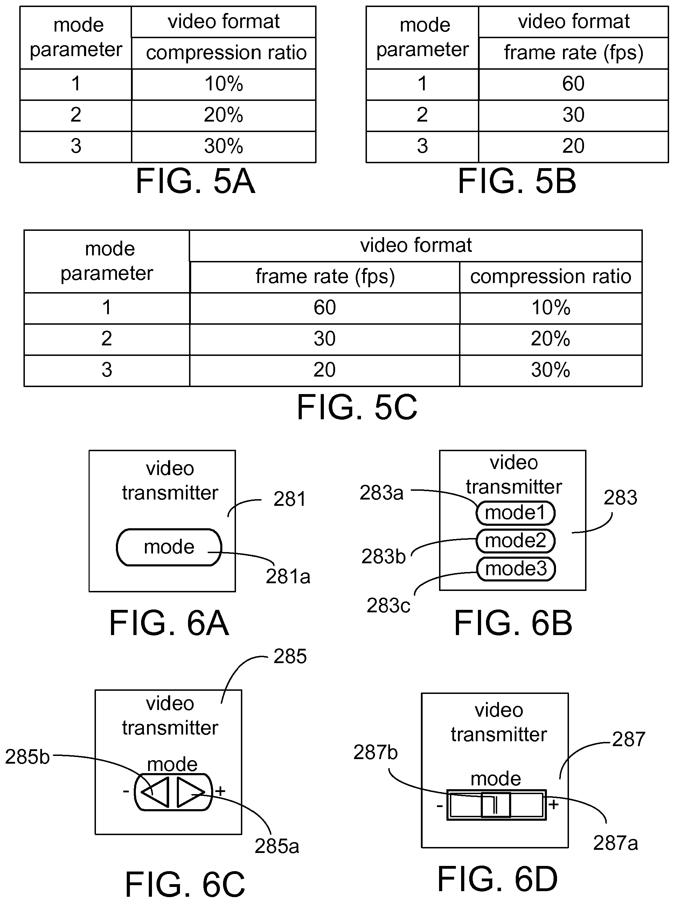

FIGS. 5A, 5B and 5C schematically illustrate mapping between the values of the mode parameter and the video formats. These examples are presented herein for purpose of illustration and description only. That is, the mappings between the values of the mode parameter and the video formats may be varied according to the practical requirements. In the examples of FIGS. 5A and 5B, the values of the mode parameter are corresponding to a video property. In the example of FIG. 5C, the video formats are determined according to two video properties (for example, the frame rate and the compression ratio). In some other examples, the value of the mode parameter and its corresponding video format can be determined according to more than two video properties.

As shown in FIG. 5A, the video format corresponding to the mode parameter is determined according to the compression ratio. For example, in case that the value of the mode parameter is "1", the video format corresponding to 10% of compression ratio is selected. In case that the value of the mode parameter is "2", the video format corresponding to 20% of compression ratio is selected. In case that the value of the mode parameter is "3", the video format corresponding to 30% of compression ratio is selected.

As shown in FIG. 5B, the video format corresponding to the mode parameter is determined according to the frame rate (or frames per second, fps). In case that the value of the mode parameter is "1", the video format corresponding to 60 fps of frame rate is selected. In case that the value of the mode parameter is "2", the video format corresponding to 30 fps of frame rate is selected. In case that the value of the mode parameter is "3", the video format corresponding to 20 fps of frame rate is selected.

As shown in FIG. 5C, the video format corresponding to the mode parameter is determined according to the compression ratio and the frame rate. For example, in case that the value of the mode parameter is "1", the video format corresponding to 10% of compression ratio and 60 fps of frame rate is selected. In case that the value of the mode parameter is "2", the video format corresponding to 20% of compression ratio and 30 fps of frame rate is selected. In case that the value of the mode parameter is "3", the video format corresponding to 30% of compression ratio and 20 fps of frame rate is selected.

FIGS. 6A, 6B, 6C and 6D schematically illustrate four examples of the hardware operation unit of the video transmitter. As shown in FIG. 6A, a single key 281a is employed as the hardware operation unit of the video transmitter 281. Under this circumstance, the mode parameter is gradually increased or decreased in a recursive manner when the single key 281a is pressed down. As shown in FIG. 6B, the hardware operation unit of the video transmitter 283 includes plural keys 283a, 283b and 283c. When one of the keys is pressed down, the corresponding mode parameter is selected. As shown in FIG. 6C, the hardware operation unit of the video transmitter 285 includes two direction keys 285a and 285b. When the direction key 285a is pressed down, the mode parameter corresponding to the higher video quality is selected. When the direction key 285b is pressed down, the mode parameter corresponding to the lower video quality is selected. As shown in FIG. 6D, a slide switch 287a is employed as the hardware operation unit of the video transmitter 287. When the button 287b of the slide switch 287a is moved to the right side, the mode parameter corresponding to the higher video quality is selected. When the button 287b of the slide switch 287a is moved to the left side, the mode parameter corresponding to the lower video quality is selected. In some other embodiments, rollers or any other appropriate elements can be used as the hardware operation unit of the video transmitter. The above examples of the hardware operation unit are presented herein for purpose of illustration and description only.

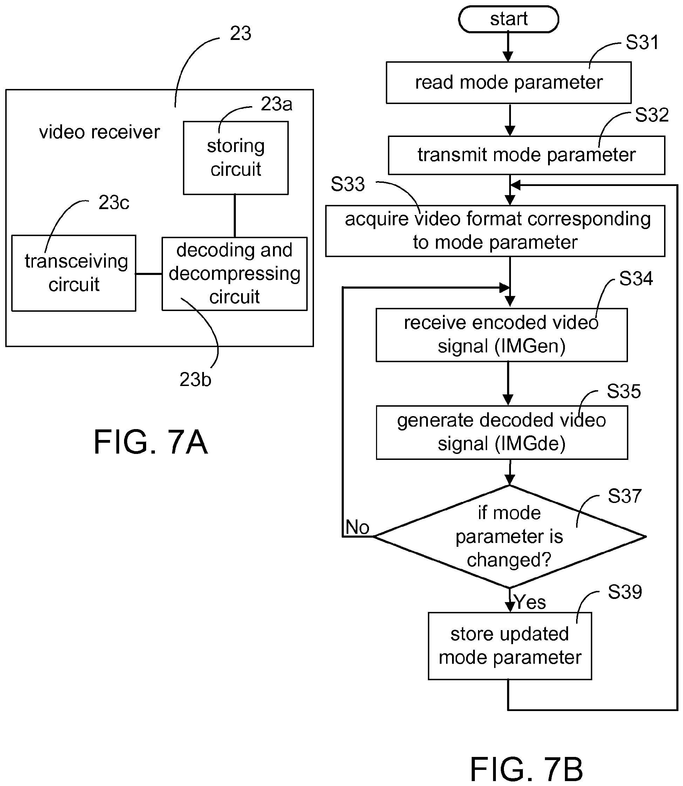

FIG. 7A is a schematic block diagram illustrating a video receiver. As shown in FIG. 7A, the video receiver 23 includes a storing circuit 23a, a decoding and decompressing circuit 23b and a transceiving circuit 23c, which are electrically connected with each other. The transceiving circuit 23c is in communication with the wireless network 25. The values of the mode parameter and their corresponding video formats are stored in the storing circuit 23a. In other words, the look-up tables as shown in FIGS. 5A, 5B and 5C can also be stored in the storing circuit 23a. The look-up table in the storing circuit of the video transmitter 27 and the look-up table in the storing circuit of the video receiver 23 are identical. Consequently, the encoding and compressing circuit 27b and the decoding and decompressing circuit 23b can perform the corresponding encoding/decoding operation and the corresponding compressing/decompressing operation.

FIG. 7B is a flowchart of an operating method of the video. In a step S31, the decoding and decompressing circuit 23b and the transceiving circuit 23c read the mode parameter from the storing circuit 23a. Then, the mode parameter is transmitted from the transceiving circuit 23c to the wireless network 25 (Step S32). Then, the decoding and decompressing circuit 23b acquires the video format corresponding to the mode parameter (Step S33). Then, the transceiving circuit 23c receives the encoded video signal IMGen through the wireless network (Step S34). After the encoded video signal IMGen is decoded and decompressed by the decoding and decompressing circuit 23b, a decoded video signal IMGde is generated and transmitted to the video display device 21 (Step S35).

While the encoded video signal IMGen is received, the video receiver 23 also determines whether an updated mode parameter is received (Step S37). If the determination condition of the step S37 is not satisfied, the steps S34 and S35 are repeatedly done. If the determination condition of the step S37 is satisfied, the updated mode parameter is stored (Step S39), and the steps S33, S34 and S35 are repeatedly done.

In some situations, the video display device 21 (for example, a projector) is used by different users in turn. For example, the projector is firstly used by the user A, and then used by the user B. That is, the mode parameter of the video receiver 23 is possibly changed by user A. In such case, the video receiver 23 needs to transmit the mode parameter to the video transmitter being used by the user B. Then, the video receiver 23 and the video display device 21 are provided to user B for making a presentation.

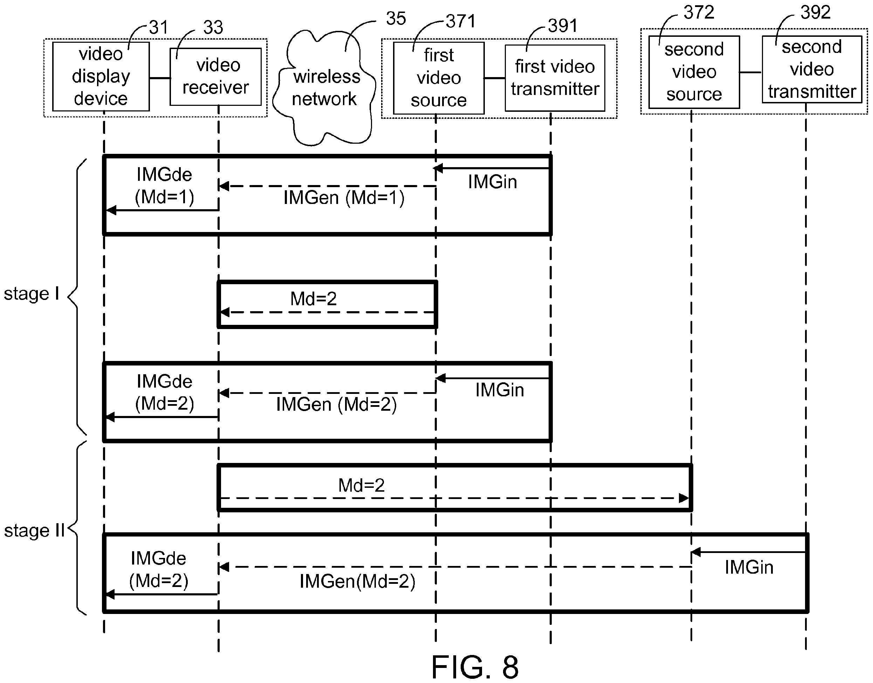

FIG. 8 schematically illustrates a process of changing the principle video transmitter of the video playing system. For example, a first video source 391 (for example, a notebook computer) and a first video transmitter 371 (for example, an external video transmitter) are operated by user A, and a second video source 392 (for example, another notebook computer) and a second video transmitter 372 (for example, another external video transmitter) are operated by user B. In the first stage (stage I), the video receiver 33 receives the video signals from the first video source 391 of user A. In the second stage (stage II), the video receiver 33 receives the video signals from the second video source 392 of user B.

For example, in the stage I of FIG. 8, user A makes a presentation. After the first video source 391 generates an initial video signal IMGin, the initial video signal IMGin is transmitted to the first video transmitter 371. After the initial video signal IMGin is encoded and compressed by the first video transmitter 371, an encoded video signal IMGen is generated and transmitted to the video receiver 33. After decompressing and decoding the encoded video signal IMGen, the video receiver 33 transmits a decoded video signal IMGde to the video display device 31.

Moreover, if user A operates the hardware operation unit (not shown) of the first video transmitter 371 and the mode parameter is changed, the updated value of the mode parameter is also transmitted from the first video transmitter 371 to the video receiver 33. Under this circumstance, the first video transmitter 371 encodes and compress the initial video signal IMGin according to the updated value of the mode parameter. That is, the encoded video signal IMGen is generated according to the updated value of the mode parameter and then transmitted to the wireless network 35. After receiving the encoded video signal IMGen from the wireless network 35, the video receiver 33 decompresses and decodes the encoded video signal IMGen. Consequently, a decoded video signal IMGde is generated and transmitted to the video display device 31.

In the stage I of FIG. 8B, user B makes a presentation. User B employs the second video transmitter 372 and the second video source 392 to transmit the video signals. Since the updated value of the mode parameter from the first video transmitter 371 has been stored in the video receiver 33, the updated value of the mode parameter from the video receiver 33 is received by the second video transmitter 372. After the second video source 392 generates an initial video signal IMGin, the initial video signal IMGin is transmitted to the second video transmitter 372. Then, the initial video signal IMGin is encoded and compressed by the second video transmitter 372 in the video format corresponding to the updated value of the mode parameter. Then, the encoded video signal IMGen is transmitted to the wireless network 35. After the encoded video signal IMGen from the wireless network 35 is received by the video receiver 33, the encoded video signal IMGen is decompressed and decoded by the video receiver 33 in the video format corresponding to the updated value of the mode parameter. Consequently, a decoded video signal IMGde is generated and transmitted to the video display device 31.

As mentioned above, the first video transmitter 371 and the second video transmitter 372 can be used to transmit the encoded video signal IMGen. If the mode parameter is changed through the previous video transmitter (for example, the first video transmitter 371) paring with the video receiver 33, the updated value of the mode parameter is stored in the video receiver 33. Once the current video transmitter (for example, the second video transmitter 372) pairs with the video receiver 33, the updated value of the mode parameter is transmitted from video receiver 33 to the current video transmitter.

In an embodiment, both of the first video transmitter 371 and the second video transmitter 372 can operate in two states, that is, a standby state and a control state. Moreover, these two operation modes can be indicated by the corresponding indication lamps. For example, a green lamp is turned on when the first video transmitter 371 and/or the second video transmitter 372 are/is in the standby state, and a red lamp is turned on when the first video transmitter 371 and/or the second video transmitter 372 are/is in the control state.

When the video transmitter is in the standby state, the video transmitter does not transmit the encoded video signal IMGen. When the video transmitter is in the control state, the video transmitter is in communication with the video receiver 33 and the video transmitter is able to generate and transmit the encoded video signal IMGen. Please refer to FIG. 8 again. In the stage I, the first video transmitter 371 is in the control state, and the second video transmitter 372 is in the standby state. In the stage II, the first video transmitter 371 is in the standby state, and the second video transmitter 372 is in the control state.

That is, the video transmitter in the control state can dynamically change the mode parameter. Moreover, the updated value of the mode parameter is transmitted from the video transmitter to the video receiver 33. After the updated value of the mode parameter is received by the video receiver 33, the updated value of the mode parameter is stored in the video receiver 33. Subsequently, the other video transmitter in the control state can transmit the video signals according to the updated value of the mode parameter. In an embodiment, after the updated value of the mode parameter from the first video transmitter 371 is received by the video receiver 33, the updated value of the mode parameter can be broadcasted from the video receiver 33 to the second video transmitter 372 and the nearby video transmitters through the wireless network 35. In another embodiment, when the second video transmitter 372 is in the control state, the updated value of the mode parameter can be transmitted from the video receiver 33 to the second video transmitter 372 through the wireless network 35 in a unicast manner.

As mentioned above, the user may operate a remote controller to control the on/off states of the video display device. However, since the video receiver is an external device, the user cannot turn off the video receiver through the remote controller. Moreover, like the video display device (for example, a projector), the video receiver is possibly located at the higher position. Under this circumstance, it is difficult to turn off the video receiver. In other words, the video receiver cannot achieve the power-saving purpose.

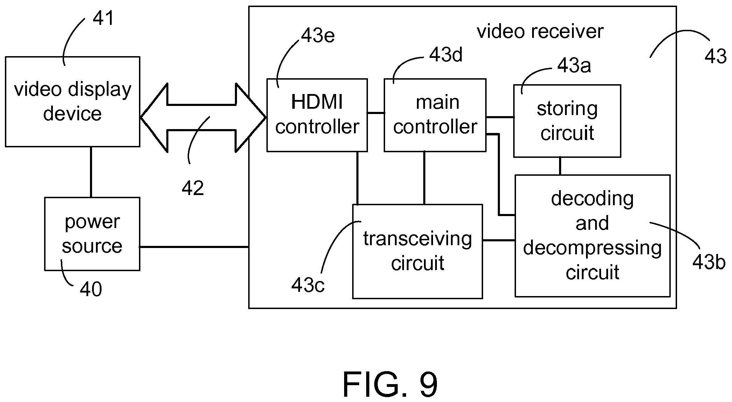

For achieving the power-saving purpose, the video receiver needs to be further improved. FIG. 9 is a schematic block diagram illustrating the connection between the video receiver and the video display device through an HDMI cable according to the present invention. The video display device 41 and the video receiver 43 are respectively connected with a power source 40. The video display device 41 and the video receiver 43 are electrically connected with each other through an HDMI cable 42. Generally, the operations of the video receiver 43 are highly dependent on the video display device 41. If the video display device 41 is turned off, the video receiver 43 does not need to be maintained in the enabled state. The power switch of the video display device 41 and the power switch of the video receiver 43 are independent of each other. After the video display device 41 is turned off through the remote controller, the video receiver 43 cannot realize that the video display device 41 is already turned off and the video receiver 43 is not controlled through the remote controller.

In this embodiment, the video receiver 43 includes a storing circuit 43a, a decoding and decompressing circuit 43b, a transceiving circuit 43c, a main controller 43d and an HDMI controller 43e. Moreover, the HDMI controller 43e includes a state register (not shown). The HDMI controller 43e senses the voltage of a signal in the HDMI cable 42. According to the voltage sensing result, the HDMI controller 43e determines a current operation mode of the video display device 41 and writes a corresponding state value into the state register. For example, the state value "0" indicates that the video display device 41 is in a low power consumption mode such as a power-off mode or a hibernation mode. Moreover, the state value "1" indicates that the video display device 41 is in a normal mode.

Then, the main controller 43d reads the state value from the state register. According to the state value, the main controller 43d controls the operation modes of the storing circuit 43a, the decoding and decompressing circuit 43b and the transceiving circuit 43c of the video receiver 43. For example, if the state value in the state register is "0", the storing circuit 43a, the decoding and decompressing circuit 43b and the transceiving circuit 43c are operated in the hibernation mode under control of the main controller 43d. Whereas, if the state value in the state register is "1", the storing circuit 43a, the decoding and decompressing circuit 43b and the transceiving circuit 43c are operated in the normal mode under control of the main controller 43d. When the video receiver 43 is in the normal mode, the consumed current is about 700-800mA. When the video receiver 43 is in the hibernation mode, the consumed current is about 4mA. In other words, the video receiver 43 in the hibernation mode can achieve the power-saving purpose.

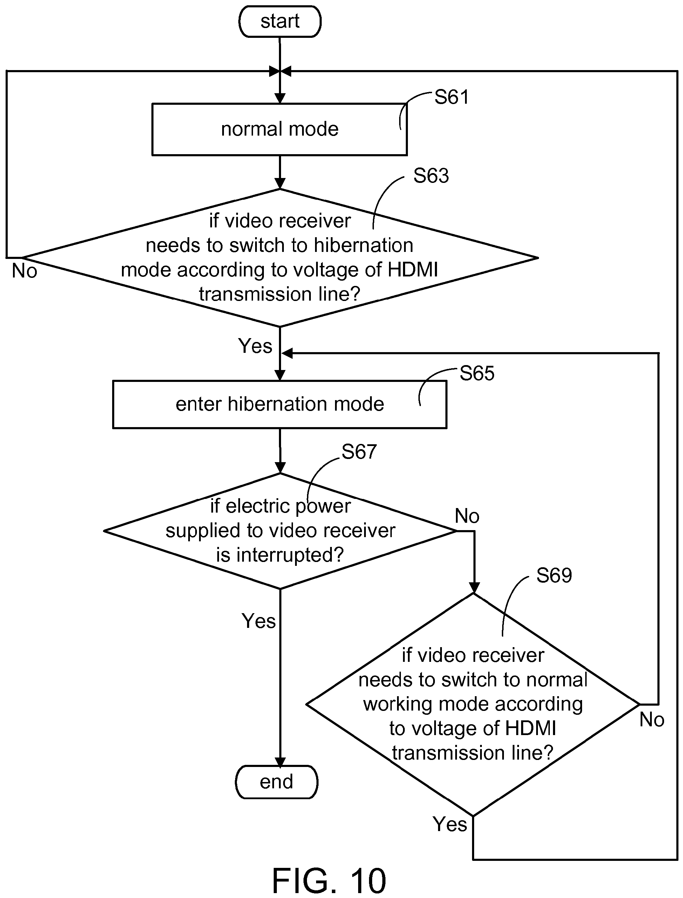

FIG. 10 is a flowchart of a mode switching method of the video receiver according to an embodiment of the present invention. Firstly, the video receiver 43 is in a normal mode (Step S61). Then, a step S63 is performed to determine whether the video receiver 43 needs to be switched to the hibernation mode according to the voltage of the signal in the HDMI cable 42. If the determination condition of the step S63 is not satisfied, the step S61 is repeatedly done. Whereas, if the determination condition of the step S63 is satisfied, the video receiver 43 enters the hibernation mode under control of the main controller 43d (Step S65).

In the hibernation mode of the video receiver 43, the HDMI controller 43e continuously determines whether the electric power supplied to the video receiver 43 is interrupted (Step S67). If the determination condition of the step S67 is satisfied, the flowchart is ended. Whereas, if the determination condition of the step S67 is not satisfied, the HDMI controller 43e continuously detects the voltage of the signal in the HDMI cable 42. Then, a step S69 is performed to determine whether the video receiver 43 needs to be switched to the normal mode according to the voltage of the signal in the HDMI cable 42. If the determination condition of the step S69 is satisfied, the operation mode of the video receiver 43 is switched from the hibernation mode to the normal mode (Step S61). Whereas, if the determination condition of the step S69 is not satisfied, the step S65 is repeatedly done.

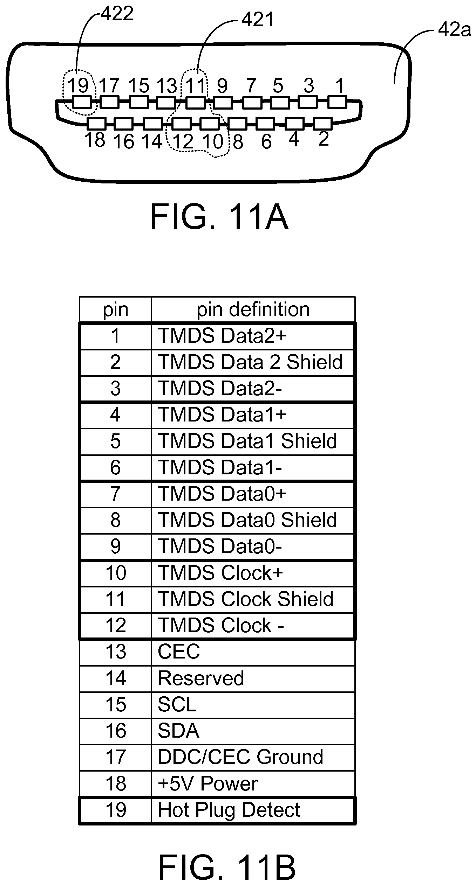

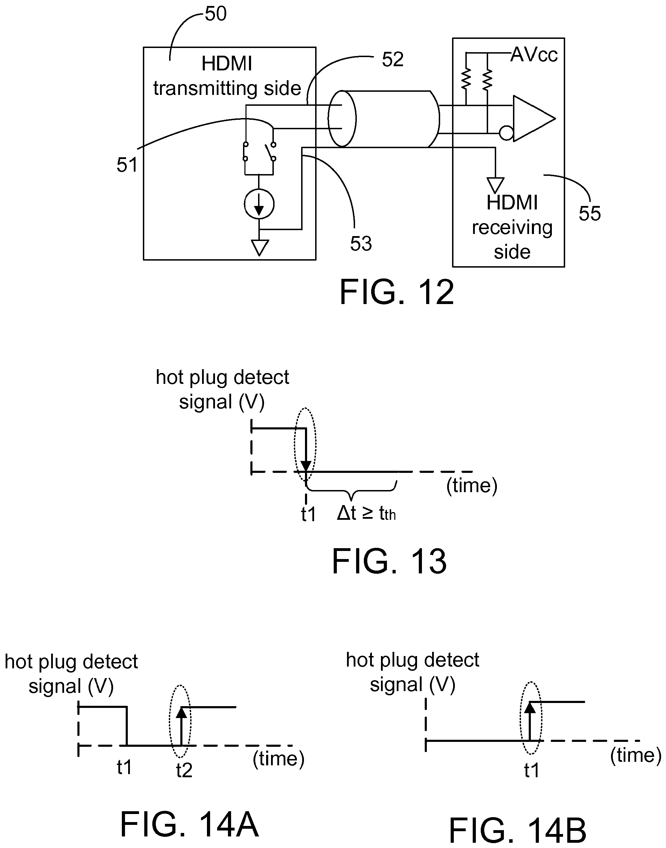

The steps S63 and S69 of determining whether the operation mode of the video receiver 43 needs to be switched according to the voltage of the signal in the HDMI cable 42 will be illustrated in more details with reference to FIGS. 11A, 11B, 12, 13, 14A and 14B. The signals to be used for determining the operation mode of the video display device 41 are described in FIGS. 11A and 11B. The determination procedure of the step S63 is described in FIGS. 12 and 13. The determination procedure of the step S69 is described in FIGS. 14A and 14B.

FIG. 11A schematically illustrates a connector of an HDMI transmission interface. FIG. 11B schematically illustrates the pin definition of nineteen signals of the HDMI line.

The nineteen signals of the of the HDMI line 42 are divided into three TMDS (Transition Minimized Differential Signaling) groups, a TMDS clock group 421 and the other auxiliary signals.

The Pins 1, 2 and 3 belong to the third TMDS group (TMDS Data 2). The Pins 4, 5 and 6 belong to the second TMDS group (TMDS Data 1). The Pins 7, 8 and 9 belong to the first TMDS group (TMDS Data 0). The Pins 10, 11 and 12 belong to the TMDS clock group 421. The Pin 19 is a hot plug detect signal 422.

In accordance with a feature of the present invention, the operation mode of the video display device 41 is realized according to the voltage changes of a specified TMDS group and/or the hot plug detect signal 422. The specified TMDS group is one of the three TMDS group or the TMDS clock group 421. In the following embodiments, the TMDS clock group 421 is taken as an example of the specified TMDS group. The operating principles of the other three TMDS groups are similar, and are not redundantly described herein.

FIG. 12 schematically illustrates the circuitry of the TMDS clock group. As mentioned above, the video receiver 43 transmits the decoded video signal to the video display device 41 through the HDMI line 42. Consequently, an HDMI transmitting side 50 is in the video receiver, and an HDMI receiving side 55 is in the video display device. The TMDS clock group 421 includes three signals, that is, TMDS Clock+ 51, TMDS Clock- 52 and TMDS Clock Shield 53.

The video receiver 43 is in communication with the video display device 41 through the HDMI line 42. A clock differential signal is transmitted from the HDMI transmitting side 50 to the HDMI receiving side 55. If the video display device 41 is in the normal mode, the clock differential signal is changed between a high level and a low level according to the HDMI specifications. Whereas, if the video display device 41 is in the hibernation mode, the clock differential signal from the TMDS clock group 421 is abnormal. Under this circumstance, the HDMI controller 43e determines that the video display device 41 is in the hibernation mode or the power-off mode.

FIG. 13 schematically illustrates the voltage of the hot plug detect signal changed from a high level to a low level. In this embodiment, the operation mode of the video display device 41 is realized according to the voltage change of the hot plug detect signal 422. After the voltage of the hot plug detect signal 422 is changed from the high level to the low level and maintained in the low level for a certain time period, the HDMI controller 43e determines that the video display device 41 is in the hibernation mode or the power-off mode. The HDMI controller 43e detects the falling edge of the voltage of the hot plug detect signal 422. If the time period Δt of maintaining in the low level reaches a threshold time period (tth), for example, in the range between 5 and 10 seconds, the video receiver 43 switches from the normal mode to the hibernation mode.

Depending on the design of the video display device 41, the voltage of the hot plug detect signal in the hibernation mode is selectively maintained in the high level (for example, as shown in FIG. 14A) or in the low level (for example, as shown in FIG. 14B). However, when the operation mode is switched to the normal mode, the voltage of the hot plug detect signal is changed from the low level to the high level (that is, a rising edge) at a certain time point.

FIGS. 14A and 14B are two examples illustrating the voltage of the hot plug detect signal changed from a low level to a high level. By detecting the rising edge of the voltage of the hot plug detect signal 422, the video receiver 43 is switched to the normal mode under control of the HDMI controller 43e.

Please refer to FIG. 14A. Originally, the voltage of the hot plug detect signal is maintained in the high level when the video display device 41 is in the hibernation mode. When the video display device 41 is turned on at time point t1, the video display device 41 enters the normal mode. The voltage of the hot plug detect signal is changed to the low level at time point t1 and returned to the high level at time point t2. By detecting the rising edge of the voltage of the hot plug detect signal 422 at time point t2, the HDMI controller 43e realizes that the video display device 41 is switched to the normal mode. Meanwhile, the HDMI controller 43e rewrites the corresponding state value into the state register. According to the updated state value in the state register, the components of the video receiver 43 are operated in the normal mode under control of the main controller 43d.

Please refer to FIG. 14B. Originally, the voltage of the hot plug detect signal is maintained in the low level when the video display device 41 is in the hibernation mode. When the video display device 41 is turned on at time point t1, the video display device 41 enters the normal mode, and the voltage of the hot plug detect signal changes to the high level at time point t1. By detecting the rising edge of the voltage of the hot plug detect signal 422 at time point t1, the HDMI controller 43e realizes that the video display device 41 is switched to the normal mode. Meanwhile, the HDMI controller 43e rewrites the corresponding state value into the state register. According to the updated state value in the state register, the main controller 43d controls the components of the video receiver 43 to operate in the normal mode.

According to the technologies of the present invention, the functions of the video transmitter and the video receiver are improved. The mode parameter can be dynamically changed through the video transmitter in response to the network quality. According to the mode parameter, the video signals in the video format corresponding to the desired video quality are transmitted from the video transmitter. Moreover, in case that the video display device is not used, the video receiver is automatically switched to the hibernation mode. Consequently, the power-saving purpose is achieved.

While the invention has been described in terms of what is presently considered to be the most practical and preferred embodiments, it is to be understood that the invention needs not be limited to the disclosed embodiment. On the contrary, it is intended to cover various modifications and similar arrangements included within scope of the appended claims which are to be accorded with the broadest interpretation so as to encompass all such modifications and similar structures.

## Claims

1. A mode switching method for a video receiver (43), comprising steps of:
sensing a voltage of a hot plug detect signal (422) among plural signals when the video receiver (43) is electrically connected with a video display device (41) through a video transmission line comprising the plural signals, wherein the voltage of the hot plug detect signal (422) is maintained at a high level when the video display device (41) is in a first mode; and
switching an operation mode of the video receiver (43) from the first mode to a second mode when the voltage of the hot plug detect signal (422) is changed from a low level to the high level, wherein the voltage of the hot plug detect signal (422) has been changed from the high level to the low level prior to the hot plug detect signal (422) is changed from the low level to the high level,
wherein the video receiver (43) in the first mode consumes less power than the video receiver (43) in the second mode,
wherein the video transmission line is a High Definition Multimedia Interface, HDMI, transmission line.

2. The mode switching method as claimed in claim 1, wherein the plural signals further comprise a differential signal group, and the differential signal group comprises a positive differential signal, a negative differential signal and a shield differential signal, wherein the mode switching method further comprises steps of:
sensing a voltage of the positive differential signal, a voltage of the negative differential signal and a voltage of the shield differential signal; and
switching the operation mode of the video receiver (43) from the second mode to the first mode if the voltage of the positive differential signal, the voltage of the negative differential signal or the voltage of the shield differential signal is not between the high level and the low level.

3. The mode switching method as claimed in claim 2, wherein the differential signal group is a clock differential signal group or a data differential signal group.

## Patentansprüche

1. Modusumschaltverfahren für einen Videoempfänger (43) mit den folgenden Schritten:
Erfassen einer Spannung eines Hot-Plug-Detektionssignals (422) unter mehreren Signalen, wenn der Videoempfänger (43) über eine, die mehreren Signale aufweisende Videoübertragungsleitung elektrisch mit einer Videoanzeigevorrichtung (41) verbunden ist, wobei die Spannung des Hot-Plug-Detektionssignals (422) auf einem hohen Pegel gehalten wird, wenn sich die Videoanzeigevorrichtung (41) in einem ersten Modus befindet; und
Umschalten eines Betriebsmodus des Videoempfängers (43) vom ersten Modus auf einen zweiten Modus, wenn die Spannung des Hot-Plug-Detektionssignals (422) von einem niedrigen Pegel zu dem hohen Pegel geändert wird, wobei die Spannung des Hot-Plug-Detektionssignals (422) von dem hohen Pegel zu dem niedrigen Pegel geändert wurde, bevor das Hot-Plug-Detektionssignal (422) von dem niedrigen Pegel zum hohen Pegel geändert wird,
wobei der Videoempfänger (43) im ersten Modus weniger Energie verbraucht als der Videoempfänger (43) im zweiten Modus verbraucht,
wobei die Videoübertragungsleitung eine High-Definition-Multimedia-Interface-Übertragungsleitung, HDMI, ist.

2. Modusumschaltverfahren nach Anspruch 1, bei welchem die mehreren Signale ferner eine Differenzsignalgruppe aufweisen, und die Differenzsignalgruppe ein positives Differenzsignal, ein negatives Differenzsignal und ein Abschirmungsdifferenzsignal aufweist, wobei das Modusumschaltverfahren ferner die folgenden Schritte aufweist:
Erfassen einer Spannung des positiven Differenzsignals, einer Spannung des negativen Differenzsignals und einer Spannung des Abschirmungsdifferenzsignals; und
Umschalten des Betriebsmodus des Videoempfängers (43) von dem zweiten Modus auf den ersten Modus, wenn die Spannung des positiven Differenzsignals, die Spannung des negativen Differenzsignals oder die Spannung des Abschirmungsdifferenzsignals nicht zwischen dem hohen Pegel und dem niedrigen Pegel liegt.

3. Modusumschaltverfahren nach Anspruch 2, bei welchem die Differenzsignalgruppe eine Takt-Differenzsignalgruppe oder eine Daten-Differenzsignalgruppe ist.

## Revendications

1. Procédé de commutation de mode pour un récepteur vidéo (43), comprenant des étapes consistant à :
capter une tension d'un signal de détection de branchement à chaud (422) parmi de multiples signaux lorsque le récepteur vidéo (43) est connecté électriquement à un dispositif d'affichage vidéo (41) par l'intermédiaire d'une ligne de transmission vidéo comprenant les multiples signaux, la tension du signal de détection de branchement à chaud (422) étant maintenue à un niveau haut lorsque le dispositif d'affichage vidéo (41) est dans un premier mode ; et
commuter un mode de fonctionnement du récepteur vidéo (43) du premier mode à un second mode lorsque la tension du signal de détection de branchement à chaud (422) est changée d'un niveau bas au niveau haut, la tension du signal de détection de branchement à chaud (422) ayant été changée du niveau haut au niveau bas avant que le signal de détection de branchement à chaud (422) soit changé du niveau bas au niveau haut,
dans lequel le récepteur vidéo (43) dans le premier mode consomme moins de puissance que le récepteur vidéo (43) dans le second mode,
dans lequel la ligne de transmission vidéo est une ligne de transmission d'interface multimédia haute définition, HDMI.

2. Procédé de commutation de mode selon la revendication 1, dans lequel les multiples signaux comprennent en outre un groupe de signaux différentiels, et le groupe de signaux différentiels comprend un signal différentiel positif, un signal différentiel négatif et un signal différentiel de blindage, le procédé de commutation de mode comprenant en outre des étapes consistant à :
capter une tension du signal différentiel positif, une tension du signal différentiel négatif et une tension du signal différentiel de blindage ; et
commuter le mode de fonctionnement du récepteur vidéo (43) du second mode au premier mode si la tension du signal différentiel positif, la tension du signal différentiel négatif ou la tension du signal différentiel de blindage n'est pas entre le niveau haut et le niveau bas.

3. Procédé de commutation de mode selon la revendication 2, dans lequel le groupe de signaux différentiels est un groupe de signaux différentiels d'horloge ou un groupe de signaux différentiels de données.
